# EUROPEAN PATENT SPECIFICATION

(11) **EP 1 035 261 B1**
(45) Date of publication and mention of the grant of the patent: **17.05.2006**
(21) Application number: 00103928.8
(22) Date of filing: 25.02.2000
(51) Int. Cl.: E03F 1/00

(54) **Vacuum toilet system**
Vakuumtoilettensystem
Système de toilettes à vide

(30) Priority: 10.03.1999 FI 990516
(43) Date of publication of application: 13.09.2000
(73) Proprietor: Evac International Oy, 00380 Helsinki (FI)
(72) Inventor: Nilsson, Ake, 29494 Sölvesborg (SE); Ströby, Lennart, 29194 Kristianstad (SE)
(74) Representative: Glaeser, Joachim

(56) References cited:
- EP-A- 0 829 584
- DE-A- 4 131 367
- GB-A- 680 154
- GB-A- 2 068 468
- US-A- 2 658 202
- US-A- 4 297 751
- US-A- 5 002 592
- US-A- 5 644 802

## Description

The invention relates to a vacuum toilet system according to the preamble of claim 1, Systems of this kind are known (DE-A-4131367, US-A-5644802

Common to all vacuum toilet systems is that sewage, which has been pressed out from a toilet into a sewer pipe connected to the toilet, has to be stored in a container for a longer or shorter period before a further transport of the sewage can take place. This is related to the idea of a vacuum toilet, which is based on that the toilet sewage is collected in a system where the pressure is substantially lower, generally about a half atmosphere lower than in the surrounding. In the following this lower pressure will be called "vacuum" and the surrounding pressure "atmospheric pressure".

It is self-evident that special measures have to be taken in order to remove the waste from the vacuum space of the system to the surrounding where atmospheric pressure prevails. The most common measure is to break the vacuum, i.e. to let atmospheric air temporarily flow into the vacuum system and thereby by known means remove the sewage before vacuum is reestablished. In order that such a pressure change can take place, there has to be a place for the pressure change to take place. This space is here called a "collecting container" and at least one such place is present in all vacuum toilet systems.

In vacuum toilet systems on trains one has conventionally used relatively large collecting containers which have been emptied during the maintenance stops of the railway cars. These containers have been placed in suitable places in the undercarriage of a railway car, which has brought about a risk of freezing in cold weather. In order to eliminate the risk of freezing the collecting containers have been provided with heating systems, which has raised costs considerably.

The object of the present invention is to achieve a simple, robust and cost-effective train vacuum toilet system. The system is particularly intended for countries where emptying of toilet sewage on the track is allowable, although sometimes with restrictions. The object of the invention is attained by a system according to claim 1.

A number of constructional principles that influence each other are combined in the invention.

The first principle is that the collecting container can be emptied directly on the track when the train or other vehicle unit is in motion outside built-up areas, whereby the collecting container can be made relatively small.

The second principle is that the collecting container shall be arranged so close to the toilet room that the temperature in the room prevents the freezing of the contents of the collecting container. This becomes possible partly because the collecting container is relatively small, and partly because it is elongated and vertically mounted, so that it easily fits for example in a corner of the toilet room.

The elongated form of the collecting container is particularly advantageous because there will be a high free space above the fluid that is collected in the container. Thus, it will be relatively easy to lead sewage fluid into the container without having the fluid splashing up towards the duct through which the vacuum generator sucks air out of the container. Nonetheless, special attention has to be paid to the designing of the connection of the sewer pipe to the collecting container. The elongated form of the container also makes it more easy to separate air from the fluid in the container and to maintain a sufficiently high air volume in the container even when it contains a maximum amount of fluid. These advantages are attained by connecting the sewer pipe to the collecting container in the vicinity of its central portion.

According to the invention the collecting container is substantially cylindrical with an inner diameter of 160 to 350 mm, preferably 175 to 300 mm. A collecting container dimensioned like this may easily be installed in a corner of the toilet room. Its height is then usually less than 2 m, which further facilitates installation. A container with a cylindrical form is easy to manufacture and can be made to resist the pressure strain that is caused by a pressure difference of half an atmoshpere.

A collecting container that is not high enough, i.e. being positioned vertically, often makes it difficult to separate the driving air from the fluid and solid components of the sewage at the time of inflow of the sewage into the container. Therefore the collecting container comprises a substantially cylindrical main portion, with a length of at least 1.0 m, preferably at least 1.4 m.

As the collecting container preferably is installed in level with the toilet room and because the sewer pipe is to be connected to the central portion of the container there are in principle two possibilities for drawing the sewer pipe from a toilet to the collecting container. According to the invention and due to flow technical reasons the sewer pipe extends between a toilet and the collecting container firstly upwards and then, preferably via the ceiling of the toilet room, it is drawn towards the collecting container and closer to it runs downwards to the point where the pipe is connected to the container,

The problems with heavy splashing in the collecting container is eliminated in that the collecting container at the connection point of the sewer pipe has a device acting as a guiding surface for controlling or conducting the sewage flow downwards in the container. Such a guiding surface comprises an upwards sealing means with a in the direction from the container wall towards the center of the container somewhat downwards inclined part and to this and to two opposite parts of the collecting container wall connected substantially in the longitudinal direction of the container arranged downwards directed part. The distance of the downwards directed part from the wall of the collecting container or the end part or opening of the sewer pipe connected to the collecting container should be about 110 to 70 mm, preferably about 100 to 75 mm. Furthermore, it is preferable that the guiding surface for conducting the sewage flow in the container extends downwards to a level which is at a distance from the center of the end part or opening of the sewer pipe of at least 100 mm, preferably at least 120 mm.

The emptying of the collecting container can be controlled in many different ways. The emptying function can be controlled by the speed of the train so that emptying cannot take place when the train is at a standstill at a station or when the speed of the train is so high, e.g. more than 70 km/h, that the emptying causes a too large spread of sewage over the undercarriage of the car and possibly on the steps and the couplings. It is also advantageous to let automatic emptying take place each time the train slows down before entering a station area. The toilets may then be used during the stop of the train at a station.

Only a speed dependent control of the emtying function does not always provide a desired function. The speed dependent emptying may therefore be supplemented or replaced by another control function, for example remote control from impulse giving units at different sections of the railway or from a for a relevant railway section programmed travel recorder in the train. The emptying intervals have a great importance for the optimal dimensioning of the collecting container. It is therefore important that an automatic emptying system is adapted to the passenger load and driving distance of the train.

The invention shall in the following be described more in detail, by way of example, with reference to the enclosed schematic drawings, in which
Fig. 1 shows a preferred embodiment of a vacuum toilet system, and
Fig. 2 shows section II in Fig. 1 in a larger scale.

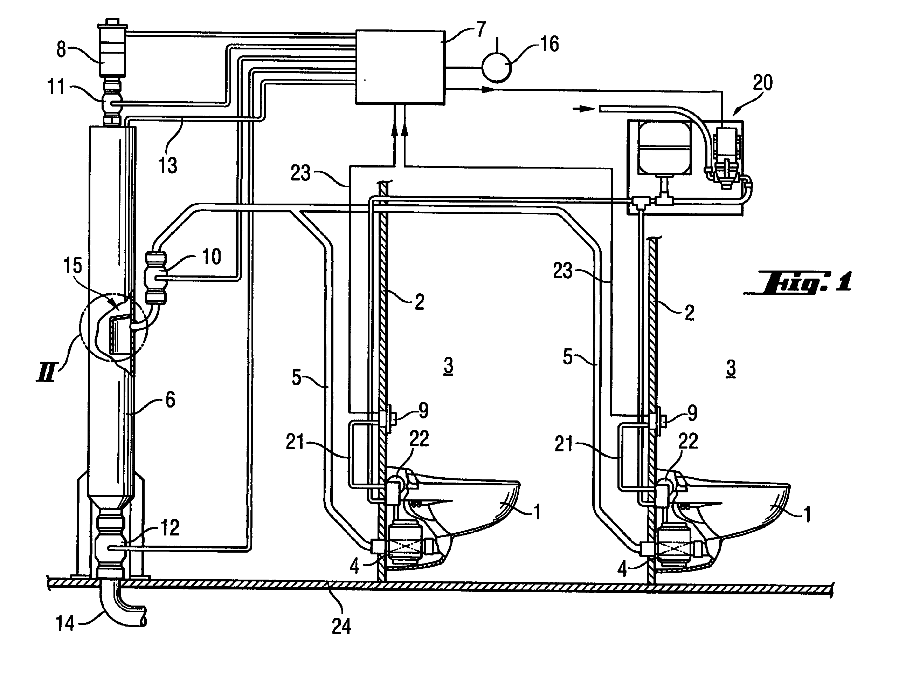

In Fig. 1 reference numeral 1 indicates a vacuum toilet of known design fastened to a wall 2 in a toilet room 3. Each toilet 1 has a normally closed discharge valve 4, which is opened only when the toilet is flushed, i.e. is emptied from sewage present therein. The valve 4 opens towards a sewer pipe 5, which when the toilet is emptied has to be under a vacuum of about half the atmospheric pressure. The pressure difference between the toilet room and the sewer pipe thus amounts to about 0.5 bar in this situation. When the discharge valve 4 is opened, the air in the toilet room 3 presses the sewage present in the toilet bowl into the sewer pipe 5 and drives the sewage in the form of a plug with a high speed into a collecting container 6 connected to an end part of the sewer pipe. The inner diameter of the sewer pipe is about 50 mm. Firstly, the sewer pipe 5 is drawn upwards from the toilet 1 to the vicinity of the ceiling level of the toilet room 3 and thereafter downwards to a point where it is connected to the collecting container 6.

An ejector 8 driven by pressurized air connected to an upper portion of the collecting container 6 is activated when a flush button 9 is pressed and thus arranged to give a signal for the toilet 1 to be emptied. The ejector 8 then rapidly sucks out air from the sewer pipe 5 and the collecting container 6 until the absolute pressure in these spaces has gone down to about 0.5 bar. In the shown system the valves 4 are controlled wholly pneumatically by the system vacuum and atmospheric pressure. The control is effected through an air duct 21, which from the flush button 9 leads to a pneumatic control unit 22, which controls the opening and the closing of the valve 4 depending on the vacuum level in the sewer pipe 5. A pneumatic valve control of this type is known and has been used for a long time in connection with vacuum toilets.

The collecting container 6 is advantageously placed in a corner of the toilet room 3 and may then be shielded for example by a wall panel or the like. Fig. 1 only gives a general idea of the vacuum toilet system layout. When two toilets are connected to the same collecting container, as in Fig. 1, the collecting container may for example be placed between the toilet rooms. The main point is that the collecting container 6 is thermally effected by the heating of the toilet rooms so that a risk of freezing is eliminated. The toilet rooms 3 may be heated by the general heating system (not shown) of the train.

The function of the collecting container 6 and the toilets 1 are controlled by a control center 7. The control center 7 receives through a wire 23 an electric signal when the flush button 9 is pressed. The control center 7 activates a device 20 for supplying, and, if necessary, also pressurizing, flush water to the toilets, provides for the supply of drive medium, i.e. pressurized air, to the ejector 8 and controls the function of the remote controlled valves 10,11 and 12 of the system.

The collecting container 6 is separated from the sewer pipe 5 by the valve 10 and from the ejector 8 by the valve 11. These valves are closed when the collecting container 6 is to be pressurized. In the embodiment according to Fig. 1 the valves 10,11 and 12 are controlled by pressurized air. An other type of control, e.g. electric, is feasible. By supplying pressurized air through a conduit 13 to the collecting container 6 when the valves 10 and 1 are closed, an overpressure of about 0.5 to 0.7 bar is created in the collecting container. After this the discharge or bottom valve 12 of the collecting container 6 is opened, whereby a rapid and effective emptying of the collecting container 6 is carried out through an emptying conduit 14, which opens under the floor 24 level of the railway car.

The collecting container 6 can be arranged to receive about 10 toilet flushings before it has to be emptied. Its cylindrical main portion has an inner diameter of 20 cm and a height of about 1.5 m. The distance between the center point of the sewer pipe 5 at its connection point to the collecting container 6 and the bottom part of the cylindrical portion of the collecting container is 70 cm. A flow control or splash guard device 15 is arranged at the connection point of the sewer pipe 5 to the collecting container 6. The liquid level in the collecting container should always lie well below the device 15. In this way one always has a sufficiently large air volume, about 30 liters, in the collecting container 6.

In order to prevent emptying of the collecting container 6 at such occasions when emptying is inconvenient, there is a device in the form of an impulse activator 16 programmed in dependence of the use of the train and effecting the control center 7 in any of the ways disclosed above.

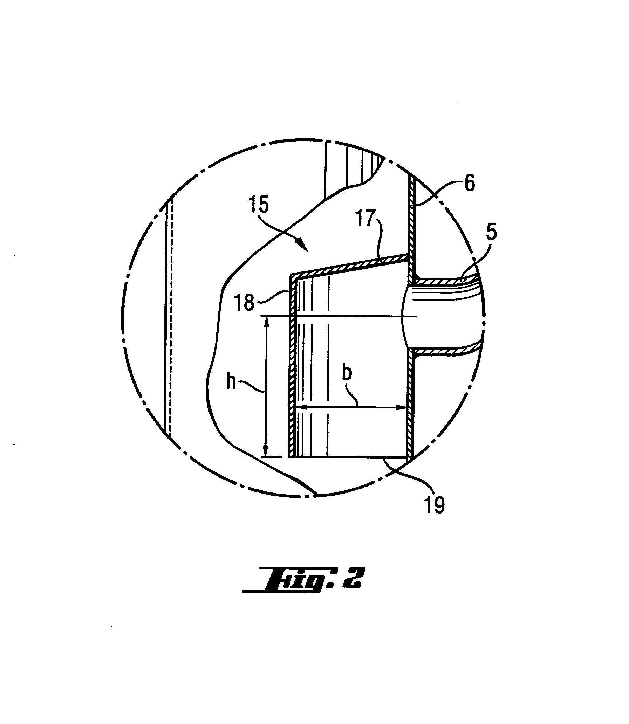

Fig. 2 shows the splash guard or flow control device 15 at the connection point of the sewer pipe 5 to the collecting container 6. The flow control device 15 comprises an upwards sealing top part 17, in the form of a circle segment, which is inclined downwards/inwards from the collecting container wall at the connection point of the sewer pipe 5. A substantially plane shield part 18 extends downwards from the inner edge of said upwards sealing part 17. The shield part is connected to the opposite walls of the collecting container 6 and extends downwards to a level 19, which is at a distance h from the center point of the opening of the sewer pipe 5 or the connection point of the sewer pipe 5 to the collecting container 6. The distance b from the shield part 18 to the opening of the sewer pipe 5 may be somewhat less than 10 cm, and the distance h about 13 cm. The shown embodiment of the device 15 provides that the sewer pipe 5 connects substantially at a right angle to the wall of the collecting container 6.

A vacuum toilet system according to the invention may be supplemented by connecting also other sanitary units, such as for example urinals and washing basins, to the vacuum sewer, i.e. the sewer pipe. Such units are connected in a known manner to the sewer pipe through a grey water valve that automatically allows fluid that has been accumulated to flow into the vacuum sewer. From the grey water valves, as well as from the toilets, function signals may be given to the control center, which thereby may keep count of which fluid amounts have been transferred to the collecting container, which makes it possible to block the functions of the system directly through the control center, if there is a risk of overflow in the collecting container.

In a railway car or other vehicle unit it is also usual that a number of toilets are connected to one collecting container.

The invention is not limited to the shown embodiments, and any modifications may be conceivable within the scope of the ensuing claim.

## Claims

1. A vacuum toilet system for railway cars and other vehicle units, comprising at least one toilet (1), a heated room (3), in which the toilet is placed, a discharge valve (4), a sewer pipe (5) and a collecting container (6), which may be put under vacuum in the order of 0.5 bar for emptying a selected toilet (1) by opening its discharge valve (4), wherein the collecting container (6) is arranged in close connection with the room (3) so that it is effected by the heating of said room, wherein the container (6) comprises an elongated substantially vertically mounted container (6) to the central part of which the sewer pipe (5) is connected and wherein the at least one toilet is connected to the sewer pipe (3) and the collecting container (6) through the discharge valve (4), **characterised in that**
the collecting container (6) is substantially cylindrical with an inner diameter of 160 to 350 mm, preferably 175 to 300 mm and a substantially cylindrical main portion with a length of at least 1.0 m, preferably at least 1.4 m;
the sewer pipe (5) between the at least one toilet (1) and the collecting container (6) in the vicinity of the toilet extends upwards and closer to the collecting container (6) extends downwards towards the connection point between the sewer pipe (5) and the collecting container (6);
the collecting container (6) at the connection point of the sewer pipe (5) to the collecting container, at the opening of the sewer pipe, comprises a device (15) for conducting sewage flow downwards, which device comprises a first part (17) extending from the wall of the container and a second part (18) extending downwards from said first part, substantially in the lengthwise directon of the collecting container, whereby the second part (18) is a distance (b) from the wall of the collecting container; (6) and
**characterised in that** the collecting container (6) and a control center (7) of the toilet system comprise a device (16), arranged to prevent the emtying of the collecting container (6)
depending on outer factors, for example the speed of the vehicle unit which the vacuum toilet system arranged.

## Patentansprüche

1. Vakuumtoilettensystem für Bahnwaggons und andere Fahrzeugeinheiten, das mindestens eine Toilette (1), einen geheizten Raum (3), in dem die Toilette platziert ist, ein Ablassventil (4), ein Abwasserrohr (5) und einen Sammelbehälter (6) aufweist, der in der Größenordnung von 0,5 Bar unter Druck gesetzt werden kann, um eine ausgewählte Toilette (1) durch Öffnen ihres Ablassventils (4) zu entleeren, wobei der Sammelbehälter (6) in dichter Verbindung mit dem Raum (3) angeordnet ist, so dass er durch das Heizen des Raums beeinflusst wird, wobei der Behälter (6) einen länglichen, im wesentlichen vertikal angebrachten Behälter (6) aufweist, an dessen Mittelteil das Abwasserrohr (5) angeschlossen ist, und wobei die mindestens eine Toilette an das Abwasserrohr (3) und den Sammelbehälter (6) durch das Ablassventil (4) angeschlossen ist, **dadurch gekennzeichnet, dass**
der Sammelbehälter (6) im wesentlichen zylindrisch mit einem Innendurchmesser von 160 bis 350 mm, vorzugsweise 175 bis 300 mm und einem im wesentlichen zylindrischen Hauptteil mit einer Länge von mindestens 1,0 m, vorzugsweise mindestens 1,4 m ist;
das Abwasserrohr (5) zwischen der mindestens einen Toilette (1) und dem Sammelbehälter (6) in der Nähe der Toilette sich nach oben erstreckt und sich näher bei dem Sammelbehälter (6) nach unten zu dem Verbindungspunkt zwischen dem Abwasserrohr (5) und dem Sammelbehälter (6) hin erstreckt,
der Sammelbehälter (6) an dem Verbindungspunkt des Abwasserrohrs (5) zu dem Sammelbehälter, an der Öffnung des Abwasserrohrs, eine Einrichtung (15) zum Leiten des Abwasserstroms nach unten aufweist, welche Einrichtung einen ersten Teil (17), der sich von der Wand des Behälters erstreckt, und einen zweiten Teil (18) aufweist, der sich von dem genannten ersten Teil nach unten, im wesentlichen in der Längenrichtung des Sammelbehälters erstreckt, wobei der zweite Teil (18) einen Abstand (b) von der Wand des Sammelbehälter (6) aufweist; und
**dadurch gekennzeichnet, dass** der Sammelbehälter (6) und ein Steuerzentrum (7) des Toilettensystems eine Einrichtung (16) aufweisen, die zum Verhindern der Entleerung des Sammelbehälters (6) abhängig von äußeren Faktoren eingerichtet ist, zum Beispiel der Geschwindigkeit der Fahrzeugeinheit, in der das Vakuumtoilettensystem angeordnet ist.

## Revendications

1. Système de toilettes à aspiration pour des wagons de chemin de fer ou d'autres unités de véhicules, comprenant au moins un appareil de toilettes (1), une pièce chauffée (3) dans laquelle est placé l'appareil de toilettes, une soupape de refoulement (4), un conduit d'égout (5) et un réservoir collecteur (6) qui peut être mis sous un vide de l'ordre de 0,5 bars afin de vider l'appareil de toilettes sélectionné (1) en ouvrant la soupape de refoulement (4), étant observé que le réservoir collecteur (6) est disposé à proximité de la pièce chauffée (3) de façon à bénéficier du chauffage de ladite pièce (3), que le réservoir collecteur (6) présente une forme allongée et est disposé verticalement, le conduit d'égout (5) étant raccordé audit réservoir collecteur (6) dans la zone centrale de celui-ci, et, que au moins appareil de toilettes est raccordé au conduit d'égout (5) et au réservoir collecteur (6) par l'intermédiaire de la soupape de refoulement (4), **caractérisé en ce que**
- le réservoir collecteur (6) est de forme sensiblement cylindrique et possède un diamètre intérieur compris entre 160 et 350 mm, de préférence entre 175 et 300 mm, la partie cylindrique principale dudit réservoir collecteur possédant un longueur d'au moins 1,0 m, de préférence d'au moins 1,4 m,
- le conduit d'égout (5) reliant le ou les appareils de toilettes (1) au réservoir collecteur (6) qui est disposé à proximité de l'appareil de toilettes, s'étend vers le haut pour approcher le réservoir collecteur (6), puis vers le bas en direction de son point de raccord avec ledit réservoir collecteur,
- à son point de raccord avec le conduit d'égout (5), le réservoir collecteur (6) comporte, à l'endroit de l'ouverture du conduit d'égout(5), un dispositif (15) pour orienter les eaux usées vers le bas, ledit dispositif (15) comprenant une première partie (17) qui s'étend depuis la paroi du réservoir collecteur et une second partie (18) qui prolonge la première partie (17) vers le bas sensiblement en direction longitudinale du réservoir collecteur (6) et qui se trouve à une distance (b) de la paroi dudit réservoir collecteur (6), et **en ce que**
- le réservoir collecteur (6) et une unité de contrôle (7) du système de toilettes sont associés à un dispositif (16) destiné à prévenir le vidage du réservoir collecteur (6) à la suite de l'intervention d'autres facteurs, par exemple la vitesse de l'unité de véhicule dans laquelle est placé le système de toilettes.
